# EUROPÄISCHE PATENTSCHRIFT

(11) **EP 3 956 952 B1**
(45) Veröffentlichungstag und Bekanntmachung des Hinweises auf die Patenterteilung: **26.11.2025**
(21) Anmeldenummer: 20715334.7
(22) Anmeldetag: 26.03.2020
(51) Int. Cl.: H01R 13/639, B60R 25/30

(54) **VORRICHTUNG, STECKVERBINDER-SET, INDIKATORELEMENT UND VERFAHREN ZUR ERKENNUNG EINER ERSTMALIGEN TRENNUNG EINER STECKVERBINDUNG**
APPARATUS, PLUG CONNECTOR SET, INDICATOR ELEMENT AND METHOD FOR IDENTIFYING INITIAL DISCONNECTION OF A PLUG CONNECTION
DISPOSITIF, ENSEMBLE DE CONNECTEURS ENFICHABLES, ÉLÉMENT INDICATEUR ET PROCÉDÉ DE DÉTECTION D'UNE PREMIÈRE SÉPARATION D'UNE CONNEXION PAR ENFICHAGE

(30) Priorität: 18.04.2019 DE 102019205646
(43) Veröffentlichungstag der Anmeldung: 23.02.2022
(73) Patentinhaber: LEONI Bordnetz-Systeme GmbH, 97318 Kitzingen (DE)
(72) Erfinder: KLEINAU, Sebastian F., 97348 Markt Einersheim (DE)
(74) Vertreter: FDST Patentanwälte
(86) Internationale Anmeldenummer: PCT/EP2020/058614
(87) Internationale Veröffentlichungsnummer: WO 2020/212114

(56) Entgegenhaltungen:
- EP-A1- 1 612 566
- EP-A1- 2 863 488
- WO-A1-2013/162590
- DE-U1- 8 907 175

## Beschreibung

Die Erfindung betrifft ein Steckverbinder-Set, welches ausgebildet ist zur Erkennung einer erstmaligen Trennung einer Steckverbindung, wobei die Steckverbindung bei der erstmaligen Trennung von einem verbundenen Zustand in einen getrennten Zustand überführt wird. Außerdem betrifft die Erfindung eine Vorrichtung sowie ein Verfahren zur Erkennung einer erstmaligen Trennung einer Steckverbindung.

Kommt es zu einem Unfall oder wird ein Schaden verursacht, so ist typischerweise nachfolgend zu klären, wer dafür die Verantwortung trägt und somit für die Folgen haftet.

Im Falle eines durch ein Kraftfahrzeug verursachten Verkehrsunfalls beispielsweise stellt sich dabei zunächst die Frage, ob eine fehlerhafte Führung des Kraftfahrzeuges durch einen Fahrer zum Verkehrsunfall geführt hat oder ob ein technischer Defekt im Kraftfahrzeug, beispielsweise ein fehlerhaft arbeitendes System für eine autonome Fahrzeugführung, ursächlich ist. Ist der Verkehrsunfall dabei auf einen technischen Defekt zurückzuführen, ist abzuklären, ob der Hersteller des Kraftfahrzeuges oder ein Zulieferer den technischen Defekt zu verantworten hat oder ob dieser technische Defekt durch eine nicht-sachgemäße Handhabung oder durch einen nicht-autorisierten Eingriff durch eine dritte Partei oder Person hervorgerufen wurde.

Bei elektrischen Systemen liegt eine entsprechende nicht-sachgemäße Handhabung oder ein entsprechender nicht-autorisierter Eingriff zum Beispiel dann vor, wenn eine nicht-autorisierte Manipulation an einem Kabelsatz oder Steuergerät erfolgt ist, wenn also beispielsweise ein versehentliches und unbemerktes Auftrennen einer Steckverbindung im Rahmen einer Wartungsarbeit insbesondere durch eine nicht-autorisiertes Person erfolgt ist.

Derzeit sind solche nicht-sachgemäßen Handhabungen oder solche nicht-autorisierter Eingriffe in elektrische Systeme häufig nicht ausreichend nachweisbar. Tritt dann ein Haftungsfall ein, so wird fälschlicherweise der Hersteller oder dessen Zulieferer in die Pflicht genommen.

Bekannt sind derzeit lediglich rein visuelle Lösungen, bei denen zum Beispiel Klebesiegel oder Verplombungen für gesteckte Verbinder zur Manipulationserkennung genutzt werden.

Davon unabhängig ist es bekannt, zur Vermeidung oder Verhinderung unbeabsichtigter Trennungen zusätzliche Rastmechanismen vorzusehen. Ein Beispiel für einen solchen zusätzlichen Rastmechanismus bei einem elektrischen Verbindersystem findet sich in der WO 2013/162490 A1.

Ausgehend hiervon liegt der Erfindung die Aufgabe zugrunde, ein vorteilhaft ausgebildetes Steckverbinder-Set, eine vorteilhaft ausgebildete Vorrichtung sowie ein vorteilhaftes Verfahren zur Erkennung einer erstmaligen Trennung einer Steckverbindung anzugeben.

Diese Aufgabe wird erfindungsgemäß gelöst durch ein Steckverbinder-Set mit den Merkmalen des Anspruchs 1, durch eine Vorrichtung mit den Merkmalen des Anspruchs 11 sowie durch ein Verfahren mit den Merkmalen des Anspruchs 14. Bevorzugte Weiterbildungen sind in den rückbezogenen Ansprüchen enthalten. Die im Hinblick auf die Vorrichtung angeführten Vorteile und bevorzugten Ausgestaltungen sind sinngemäß auch auf das Steckverbinder-Set und/oder das Verfahren übertragbar und umgekehrt.

Eine entsprechende Vorrichtung ist dabei ausgebildet zur Erkennung einer erstmaligen Trennung einer Steckverbindung, wobei die Steckverbindung bei der erstmaligen Trennung von einem verbundenen Zustand in einen getrennten Zustand überführt wird. Der verbundene Zustand beschreibt somit im Sinne dieser Anmeldung den Zustand nach der erstmaligen Ausbildung der Steckverbindung und vor der erstmaligen Trennung der Steckverbindung, nicht aber einen Zustand nach erneuter Ausbildung der Steckverbindung.

Dabei weist die Vorrichtung zwei zueinander kompatible Steckverbinder auf, nämlich einen ersten Steckverbinder und einen zweiten Steckverbinder, und sie ist bevorzugt ausgebildet für ein Bordnetz eines Kraftfahrzeuges. Weiter weist die Vorrichtung ein Indikatorelement mit einem folienartigen Träger aus einem Isoliermaterial auf, welches im verbundenen Zustand im ersten Steckverbinder sowie im zweiten Steckverbinder fixiert ist. Außerdem weist die Vorrichtung zumindest zwei Kontaktelemente auf, die über eine erste elektrische Brücke miteinander verbunden sind oder miteinander verbindbar sind. Zudem ist die Vorrichtung derart ausgestaltet, dass im Zuge der erstmaligen Trennung zumindest ein erstes Teilstück des Indikatorelements und insbesondere des folienartigen Trägers zumindest relativ zum ersten Steckverbinder versetzt wird, das Indikatorelement bzw. der folienartige Träger mechanisch beschädigt wird und die Verbindung zwischen den zwei Kontaktelementen über die erste elektrische Brücke verändert wird, wobei diese Veränderung als ein Indiz für die erstmalige Trennung der Steckverbindung erfasst wird.

Durch die Veränderung ist die erstmalige Trennung dabei insbesondere auch messtechnisch erfassbar und infolgedessen lässt sich auch der Zeitpunkt oder ein Zeitrahmen ermitteln und beispielsweise auch speichern, zu dem die erstmalige Trennung erfolgt oder erfolgt ist. Gemäß einer Ausführungsvariante wird dies auch so umgesetzt. Eine entsprechende Ermittlung eines Zeitrahmens oder Zeitpunkts ist dabei insbesondere vorteilhaft für Haftungsfragen, wie sie eingangs dargelegt wurden.

Die Veränderung ist hierbei bevorzugt derart, dass ein elektrischer Parameter, beispielsweise eine Leitfähigkeit oder ein Widerstand, zwischen den zumindest zwei Kontaktelementen geändert wird, wobei die Änderung des elektrischen Parameters als ein Indiz für die erstmalige Trennung der Steckverbindung erfasst wird.

Dabei stehen die zwei Kontaktelemente stellvertretend für eine Anzahl von Kontaktelementen, wobei die Anzahl je nach Anwendungsfall variiert. Da jedoch stets zumindest zwei Kontaktelemente gegeben sind und sich das hier beschriebene erfinderische Konzept ohne weiteres ausgehend von zwei Kontaktelementen auf eine größere Anzahl Kontaktelemente übertragen lässt, wird der Einfachheit halber nachfolgend stets nur von zwei Kontaktelementen gesprochen, also den zwei Kontaktelementen.

Bei dem folienartigen Träger handelt es sich bevorzugt um ein flaches, insbesondere streifenförmiges Bauteil, beispielsweise mit einer Breite des streifenförmigen Bauteils von wenigen mm, zum Beispiel 1,6 mm. Der folienartige Träger besteht dabei beispielsweise aus einem Polyimid. Das Indikatorelement und insbesondere der folienartige Träger wird im Zuge der erstmaligen Trennung der Steckverbindung mechanisch beschädigt, wobei die mechanische Beschädigung zweckdienlicherweise mit bloßem Auge sichtbar ist. Die Beschädigung dient dann insbesondere als zusätzliches, optisches Indiz für die erstmalige Trennung der Steckverbindung. Somit wird die erstmalige Trennung quasi auf zweierlei Weise angezeigt, nämlich durch die Beschädigung des folienartigen Trägers zum einen und durch die Veränderung der Verbindung zwischen den zwei Kontaktelementen über die erste elektrische Brücke, also beispielsweise durch die Änderung des elektrischen Parameters, und insbesondere deren bzw. dessen Erfassung zum anderen.

Eine solche Erfassung, zum Beispiel der Änderung der Leitfähigkeit, geschieht dabei beispielsweise, indem ein Sicherungselement, zum Beispiel eine Schmelzsicherung, auslöst oder indem die Veränderung durch eine Messvorrichtung oder eine Steuer- und Auswerteeinheit, beispielsweise ein Steuergerät, erfasst oder ermittelt wird. D. h., dass zum Beispiel ein Stromkreis, insbesondere ein Versorgung-Stromkreis, durch die Veränderung kurzgeschlossen wird und dass infolgedessen ein Sicherungselement, welches den Stromkreis absichert, ausgelöst wird.

Die beiden zuvor genannten zumindest zwei Kontaktelemente, die über die erste elektrische Brücke miteinander verbunden sind oder verbindbar sind, sind weiter typischerweise Teil des ersten Steckverbinders. Sie bilden also beispielsweise in einem Bordnetz zwei separate Leitungen zur Versorgung mit elektrischer Energie und/oder zur Signalübertragung mit aus und sind dementsprechend bevorzugt nicht beide Teil derselben Leitung.

Zweckdienlich ist es weiter, wenn ein Rastelement des zweiten Steckverbinders in eine Aussparung im folienartigen Träger eingreift, um den folienartigen Träger im zweiten Steckverbinder zu fixieren. Das Rastelement ist dabei beispielsweise als Nase oder Vorsprung ausgebildet und die Aussparung ist beispielsweise durch ein Loch oder eine Ausstanzung im folienartigen Träger ausgebildet.

Weiter ist das Indikatorelement mit dem folienartigen Träger im verbundenen Zustand bevorzugt derart im ersten Steckverbinder sowie im zweiten Steckverbinder fixiert, dass das Indikatorelement und insbesondere der folienartige Träger beim erstmaligen Trennen der Steckverbindung zunächst einmal im ersten Steckverbinder bis zu einem Anschlag verschoben wird.

In vorteilhafter Weiterbildung wird das Indikatorelement bzw. der folienartige Träger dabei beim erstmaligen Trennen der Steckverbindung im ersten Steckverbinder zunächst einmal aus einem ersten Rastsitz in einen zweiten Rastsitz verschoben. D. h., dass beim erstmaligen Lösen der Steckverbindung das Indikatorelement und insbesondere der folienartige Träger nicht sofort mechanisch beschädigt wird, sondern dass bevorzugt zunächst dessen Position zumindest relativ zum ersten Steckverbinder verändert wird und dass das Indikatorelement bzw. der folienartige Träger erst danach beschädigt wird, wenn die beiden Steckverbinder noch weiter auseinandergezogen werden.

Die Fixierung des Indikatorelements im ersten Steckverbinder erfolgt dabei im Falle einer Ausführung mithilfe zweier Rastsitze, nämlich einem ersten Rastsitz und einem zweiten Rastsitz, wobei jeder Rastsitz bevorzugt durch zwei Aussparungen oder Einkerbungen am folienartigen Träger ausgebildet ist. Dabei sind beispielsweise für jeden Rastsitz an zwei gegenüberliegenden Seiten des folienartigen Trägers zwei einander ergänzende insbesondere bogenförmige Aussparungen oder Einkerbungen ausgebildet. Die Rastsitze werden zweckdienlicherweise ergänzt durch zwei Haltestege, welche Teil eines Gehäuses des ersten Steckverbinders sind und die je nach Position des Indikatorelements oder des folienartigen Trägers relativ zum ersten Steckverbinder in den ersten Rastsitz oder den zweiten Rastsitz eingreifen und somit das Indikatorelement bzw. den folienartigen Träger im ersten Rastsitz oder im zweiten Rastsitz halten. Darüber hinaus bevorzugt gehen die Aussparungen der beiden Rastsitze im folienartigen Träger zudem quasi ineinander über.

Davon unabhängig wird das Indikatorelement bzw. der folienartige Träger beim erstmaligen Trennen der Steckverbindung bevorzugt derart mechanisch beschädigt, dass dieser zerteilt wird, insbesondere an einer vorgegebenen Solltrennstelle. Eine entsprechende Solltrennstelle ist dabei beispielsweise durch eine Perforierung ausgebildet.

Einer Ausgestaltungsvariante entsprechend weist weiter jedes der zwei Kontaktelemente eine Kontaktfeder auf, die jeweils im verbundenen Zustand gegen das Indikatorelement und insbesondere den folienartigen Träger drückt. Eine solche Kontaktfeder ist dabei beispielsweise als einfacher Federbalken ausgestaltet, der vom zugehörigen Kontaktelement insbesondere schräg absteht.

Die erste elektrische Brücke, mit deren Hilfe die zwei Kontaktelemente, oder in einigen Anwendungsfällen zudem eben noch weitere Kontaktelemente, verbindbar sind oder verbunden sind, ist vorzugsweise je nach Ausgestaltungsvariante Teil des Indikatorelements oder Teil des ersten Steckverbinders. Ist sie Teil des Indikatorelements, so ist sie auf dem folienartigen Träger angeordnet und beispielsweise als metallische Beschichtung ausgestaltet. Ist sie dagegen Teil des ersten Steckverbinders, so ist sie typischerweise als quasi eigenständiges Bauteil ausgebildet und/oder beispielsweise innenseitig an einem Gehäuse des ersten Steckverbinders positioniert und befestigt oder teilweise in das Gehäuse eingelassen.

Hierbei ist die erste elektrische Brücke bevorzugt entweder lediglich im verbundenen Zustand der Steckverbindung elektrisch leitfähig mit den zwei Kontaktelementen verbunden oder lediglich im getrennten Zustand, also nach der erstmaligen Trennung. Dies gilt insbesondere auch dann, wenn die beiden Steckverbinder nach der erstmaligen Trennung wieder miteinander verbunden werden. Eine erneute Verbindung wird im Sinne dieser Anmeldung nicht als verbundener Zustand betrachtet und die Änderung hin zur elektrisch leitfähigen Verbindung oder Weg von der elektrisch leitfähigen Verbindung wird durch das erneute Zusammenfügen der beiden Steckverbinder nicht wieder rückgängig gemacht.

Einer weiteren bevorzugten Ausführungsvariante entsprechend ist die Vorrichtung derart ausgebildet, dass die erste elektrische Brücke aufgrund des Versetzens des ersten Teilstücks des folienartigen Trägers oder der mechanischen Beschädigung des folienartigen Trägers im Zuge der erstmaligen Trennung der Steckverbindung mit den zwei Kontaktelementen elektrisch leitfähig verbunden wird oder dass die elektrisch leitfähige Verbindung zwischen der ersten elektrischen Brücke und den zwei Kontaktelementen aufgrund des Versetzens des ersten Teilstücks des folienartigen Trägers oder der mechanischen Beschädigung des folienartigen Trägers im Zuge der erstmaligen Trennung der Steckverbindung getrennt wird.

Je nach Anwendungsfall schließt die erste elektrische Brücke die zwei Kontaktelemente dabei kurz, wenn diese mit den zwei Kontaktelementen elektrisch leitfähig verbunden ist.

Insbesondere wenn die erste elektrische Brücke die zwei Kontaktelemente beispielsweise bei Kontakt kurzschließt, ist es weiter von Vorteil, wenn die Vorrichtung ein Sicherungselement und insbesondere eine Schmelzsicherung aufweist, welches bzw. welche elektrisch leitfähig mit einem der zumindest zwei Kontaktelemente verbunden ist. In diesem Fall liegt dann der Auslösefall für das Sicherungselement vor, wenn die erste elektrische Brücke die zwei Kontaktelemente kurzschließt und zumindest eines der zwei Kontaktelemente über eine Zuleitung mit einer Spannung beaufschlagt ist. In diesem Ausführungsbeispiel erfolgt also eine Änderung der Leitfähigkeit zwischen den zwei Kontaktelementen durch das Kurzschließen der zwei Kontaktelemente und diese Änderung wird bevorzugt erfasst durch das Auslösen des Sicherungselements.

Günstig ist weiter eine Ausführungsvariante, bei der das Indikatorelement eine elektrisch leitfähige Struktur aufweist, die mit dem folienartigen Träger verbunden ist und die die erste elektrische Brücke zumindest teilweise ausbildet. Die elektrisch leitfähige Struktur ist dabei beispielsweise durch eine metallische Beschichtung ausgebildet, sodass in diesem Fall dann das Indikatorelement zum Beispiel eine Art flexible Leiterplatte darstellt.

Einer alternativen Ausgestaltungsvariante entsprechend bildet ein im ersten Steckverbinder angeordneter und insbesondere integrierter Querleiter die erste elektrische Brücke aus, wobei der Querleiter bevorzugt auf einer Innenseite eines Gehäuses des ersten Steckverbinders positioniert ist und beispielsweise teilweise in das Gehäuse eingegossen ist.

Insbesondere wenn die erste elektrische Brücke durch einen solchen Querleiter ausgebildet ist, so ist es weiter von Vorteil, wenn der folienartige Träger, der ja aus einem Isoliermaterial besteht, im verbundenen Zustand zwischen dem Querleiter und den zumindest zwei Kontaktelementen positioniert ist und hierdurch den Querleiter von den zumindest zwei Kontaktelementen elektrisch isoliert.

Je nach Ausführungsvariante ist die erste elektrische Brücke also zum Beispiel lediglich durch eine einfache elektrisch leitfähige Struktur ausgebildet oder einen Querleiter, der beispielsweise durch einen einfachen Draht ausgebildet ist.

Alternativ weist die erste elektrische Brücke oder auch eine zweite elektrische Brücke ein Widerstandselement auf mit einem vorgegebenen Widerstandswert. Ein solches Widerstandselement ist dabei beispielsweise durch eine Kohlestruktur oder Kohleschicht ausgestaltet und/oder durch einen sogenannten SMD-Widerstand. Für den Widerstandswert wird dabei typischerweise einen Wert im Bereich mehrerer kOhm gewählt, also zum Beispiel 10 kOhm.

Insbesondere wenn die erste elektrische Brücke oder die zweite elektrische Brücke ein Widerstandselement aufweist, so wird weiter bevorzugt die Änderung Leitfähigkeit zwischen den zumindest zwei Kontaktelementen beim erstmaligen Trennen der Steckverbindung durch einen Messvorgang mittels einer Messvorrichtung oder einer Steuer- und Auswerteeinheit erfasst und ermittelt und dementsprechend weist die Vorrichtung dann eine entsprechende Messeinheit bzw. Steuer-und Auswerteeinheit auf zur messtechnischen Ermittlung des Vorliegens des getrennten Zustandes. Alternativ wird ein anderer elektrischer Parameter oder vielmehr dessen Veränderung erfasst und ermittelt.

Diese Messvorrichtung bzw. Steuer- und Auswerteeinheit weist dann weiter bevorzugt einen Speicher auf, in dem zudem bevorzugt die Ermittlung des Vorliegens des getrennten Zustandes und/oder ein Zeitrahmen oder Zeitpunkt gespeichert wird, zu dem die erstmalige Trennung erfolgt oder erfolgt ist. Hierbei gilt es klarzustellen, dass die Messvorrichtung bzw. die Steuer- und Auswerteeinheit hierbei nicht zwingend permanent im Betrieb sein muss. Erfolgt die erstmalige Trennung während die Messvorrichtung bzw. die Steuer- und Auswerteeinheit gerade außer Betrieb ist, so wird die erstmalige Trennung ermittelt, sobald die Messvorrichtung bzw. die Steuer- und Auswerteeinheit das nächste Mal in Betrieb ist. Alternativ oder ergänzend wird durch die Messvorrichtung bzw. die Steuer-und Auswerteeinheit eine mittels der Vorrichtung realisierte Funktion oder ein mittels der Vorrichtung realisierter Stromkreis stillgelegt, also beispielsweise ein realisierter Stromkreis mittels Schalter unterbrochen, wenn das Vorliegen des getrennten Zustandes ermittelt wird.

Einer weiteren Ausgestaltungsvariante entsprechend weist die erste elektrische Brücke eine elektronische Schaltung auf, welche bevorzugt als miniaturisierte elektronische Schaltung ausgebildet ist und insbesondere als integrierte Schaltung oder integrierter Schaltkreis (IC: Integrated Circuit). Die elektronische Schaltung ist dabei typischerweise Teil des Indikatorelements und zweckdienlicherweise auf dem folienartigen Träger angeordnet oder auf diesen aufgebracht. Bevorzugt dient die elektronische Schaltung hierbei als eine Art Identifikationschip oder Erkennungschip, mit dem das Indikatorelement identifizierbar ist.

Dabei ist das Indikatorelement weiter bevorzugt derart ausgestaltet, dass die elektronische Schaltung im verbundenen Zustand mit den zwei Kontaktelementen elektrisch leitfähig verbunden ist, beispielsweise mithilfe einer Leiterstruktur auf dem folienartigen Träger. Die elektrisch leitfähige Verbindung wird dann typischerweise durch eine erstmalige Trennung der Steckverbindung verändert und insbesondere beschädigt oder zerstört. Infolgedessen wird dann die elektronische Schaltung üblicherweise von den zwei Kontaktelementen getrennt oder es wird zumindest ein Stromkreis unterbrochen, über die die elektronische Schaltung mit den zwei Kontaktelementen verbunden ist.

Weist die erste elektrische Brücke nun eine solche elektronische Schaltung auf, so ist die Vorrichtung ergänzend bevorzugt derart ausgestaltet, dass im verbundenen Zustand in zumindest einem Betriebsmodus eine Interaktion zwischen dem integrierten Schaltkreis und einer zuvor genannten Auswerteeinheit erfolgt, wobei sich diese Interaktion durch eine erstmalige Trennung der Steckverbindung verändert und wobei diese Veränderung von der Auswerteeinheit als Indiz für die erstmalige Trennung der Steckverbindung erfasst wird. Im einfachsten Fall verändert sich die Interaktion dabei derart, dass nach der erstmaligen Trennung der Steckverbindung keine Interaktion mehr stattfindet oder stattfinden kann. D. h. dass die Interaktion durch die erstmalige Trennung der Steckverbindung beendet wird oder dass die Möglichkeit zur Interaktion durch die erstmalige Trennung der Steckverbindung zunichte gemacht wird.

Eine entsprechende Interaktion ist dabei zum Beispiel dergestalt, dass eine Signalübermittlung und insbesondere eine drahtgebundene Signalübermittlung erfolgt, also beispielsweise eine Signalübermittlung über die zuvor genannte Leiterstruktur auf dem folienartigen Träger. Eine entsprechende Signalübermittlung erfolgt also bevorzugt ohne Funkverbindung.

Bei dieser Art der Interaktion bedingt eine Veränderung der Interaktion je nach Anwendungszweck dann zum Beispiel das Ausbleiben einer entsprechenden Signalübermittelung. D. h., das in diesem Fall durch die erstmalige Trennung der Steckverbindung die Übertragung von Signalen typischerweise unterbunden wird, gestoppt wird oder die Möglichkeit hierfür zunichte gemacht wird.

Alternativ bedingt die Veränderung der Interaktion eine Veränderung des Signals, welches bei der Signalübermittlung übermittelt wird. Die Veränderung des Signals wiederum resultiert dann in einigen Fällen aus einer Veränderung eines elektrischen Parameters im Zuge der erstmaligen Trennung der Steckverbindung, beispielsweise einer Kapazität oder eines Wellenwiderstands, wobei die Veränderung des elektrischen Parameters zum Beispiel durch die Zerstörung oder Beschädigung eines elektrischen oder elektronischen Elements des Indikatorelements oder der ersten elektrischen Brücke infolge der erstmaligen Trennung der Steckverbindung hervorgerufen wird. Einer Ausführungsvariante entsprechend erfolgt die Veränderung des Inhalts durch die elektronische Schaltung. Diese Variante ist insbesondere zweckmäßig, wenn die elektronische Schaltung ausgebildet ist, die erstmalige Trennung der Steckverbindung zu erkennen oder zu erfassen. D. h. dass die elektronische Schaltung quasi die erstmalige Trennung der Steckverbindung erkennt und dass es diese Information an die Auswerteeinheit weiterleitet.

Einer weiteren Ausführungsvariante entsprechend übermittelt die elektronische Schaltung im Zuge der Interaktion ein Signal an die Auswerteeinheit. In vorteilhafter Weiterbildung übermittelt die elektronische Schaltung im Zuge der Interaktion periodisch oder in gewissen zeitlichen Abständen ein Signal an die Auswerteeinheit.

Bei einem mittels Signalübermittelung übermittelten Signal handelt es sich bevorzugt um ein das Indikatorelement identifizierendes Signal, also beispielsweise eine Art Nachricht, die zweckdienlicherweise codiert ist und/oder eine einmalige Information, also zum Beispiel eine Seriennummer, enthält. Ein derartiges Signal identifiziert dabei üblicherweise nicht einfach nur einen Typ von Indikatorelementen sondern ein einzelnes Indikatorelement eindeutig, so wie beispielsweise eine Fahrzeugidentifikationsnummer ein Kraftfahrzeug eindeutig identifiziert.

In diesem Fall ist dann zweckdienlicherweise die Auswerteeinheit dazu eingerichtet, ein spezielles Indikatorelement zu erkennen, wobei zum Einrichten der Auswerteeinheit zum Beispiel ein Anlernprozess genutzt wird oder wobei beim Einrichten eine Referenz, also beispielsweise ein Vergleichssignal, in der Auswerteeinheit hinterlegt wird. Infolgedessen ist eine entsprechende Auswerteeinheit dann nicht nur dazu fähig, zwischen verbundenen Zustand und getrennten Zustand zu differenzieren sondern auch ein spezielles, einzigartiges Indikatorelement zu erkennen.

Eine Ausgestaltung der Vorrichtung mit einer elektronischen Schaltung erlaubt innerhalb gewisser technischer Grenzen auch das Erkennen eines Manipulationsversuchs, bei dem das beschädigte Indikatorelement z. B. mit leitfähigem Klebstoff wieder zusammengefügt wird, da sich beispielsweise beim klebenden Zusammenfügen elektrische Parameter geringfügig ändern.

Weiter ist eine Ausführungsvariante von Vorteil, bei der das Indikatorelement für jedes der zwei Kontaktelemente eine elektrisch leitfähige Kontaktfeder aufweist, die gegen das zugehörige Kontaktelement drückt. Diese Variante ist insbesondere dann zweckdienlich, wenn die Kontaktelemente selbst keine Kontaktfedern aufweisen.

In vorteilhafter Weiterbildung ist jede Kontaktfeder als Stanz-Biege-Teil ausgestaltet, weiter bevorzugt am folienartigen Träger befestigt, insbesondere verrastet, und zudem bevorzugt mit einer am folienartigen Träger anhaftenden Leiterstruktur elektrisch leitfähig kontaktiert, beispielsweise durch Verlöten.

Vorteilhaft ist es zudem, wenn jede Kontaktfeder zumindest ein Rastelement aufweist, mit dem das Indikatorelement im ersten Steckverbinder verrastet ist oder verrastbar ist.

Einer weiteren vorteilhaften Ausführungsvariante entsprechend weist der erste Steckverbinder ein Gehäuse mit Öffnungen für Kontaktelemente in zwei übereinanderliegenden Ebenen auf, wobei die zumindest zwei Kontaktelemente in einer der zwei Ebenen angeordnet sind und wobei das Indikatorelement in der anderen Ebene angeordnet ist. D. h. dass in diesem Fall eine der Ebenen, die eigentlich für Kontaktelemente ausgebildet ist, quasi zweckentfremdet wird und eben nicht für Kontaktelemente genutzt wird sondern für das Indikatorelement.

Auf diese Weise ist es möglich, zur Ausbildung der Vorrichtung beispielsweise auf Standard-Gehäuse für die Steckverbinder zurückzugreifen und insbesondere auf Gehäuse, die bereits verfügbar sind. Bevorzugt wird dann ein Gehäusetyp genutzt, welcher bekannt ist unter der Bezeichnung MQS (MQS: Micro Quadlock System). Hierbei wird dann zur Ausbildung eines n-poligen Steckverbinders ein Gehäuse für einen 2n-poligen Steckverbinder mit zwei Ebenen für die Kontaktelemente genutzt, wobei die n Kontaktelemente des n-poligen Steckverbinders alle in einer Ebene angeordnet werden und wobei das Indikatorelement in der anderen Ebene angeordnet wird. Alternativ wird ein Gehäusetyp genutzt, welcher bekannt ist unter der Bezeichnung Hirschmann SealStar 1.2.

Zweckdienlich ist es hierbei weiter, wenn die zwei Ebenen des Gehäuses innerhalb des Gehäuses über Durchtritte, also Öffnungen, miteinander verbunden sind und wenn die Kontaktfedern durch die Durchtritte hindurchgeführt sind zur Kontaktierung mit den Kontaktelementen.

Die hier beschriebene Vorrichtung ist, wie zuvor bereits erwähnt, bevorzugt für den Bereich Automobiltechnik ausgebildet und kommt daher bevorzugt in einem Kraftfahrzeug-Bordnetz zum Einsatz. Insbesondere bei einem solchen Einsatzzweck, ist es weiter von Vorteil, wenn zumindest einer der Steckverbinder eine oder mehrere Dichtungen aufweist, die insbesondere die Gehäuse des Steckverbinders nach außen hin abdichten.

Das eingangs genannte Problem wird ebenfalls gelöst durch ein Steckverbinder-Set, welches für eine zuvor beschriebene Vorrichtung ausgebildet ist. Ein solches Steckverbinder-Set weist dann zwei zueinander kompatible Steckverbinder auf, nämlich den ersten Steckverbinder und den zweiten Steckverbinder. Teil des Steckverbinder-Sets ist weiterhin das Indikatorelement mit dem folienartigen Träger aus Isoliermaterial, welches im verbundenen Zustand im ersten Steckverbinder sowie im zweiten Steckverbinder fixiert ist. Darüber hinaus weist das Steckverbinder-Set die zumindest zwei Kontaktelemente auf, die über die erste elektrische Brücke miteinander verbunden sind oder verbindbar sind. Zudem ist das Steckverbinder-Set derart ausgebildet, dass im Zuge der erstmaligen Trennung zumindest das erste Teilstück des folienartigen Trägers zumindest relativ zum ersten Steckverbinder versetzt wird, der folienartige Träger mechanisch beschädigt wird und die Verbindung zwischen den zwei Kontaktelementen über die erste elektrische Brücke verändert wird, wobei diese Veränderung als ein Indiz für die erstmalige Trennung der Steckverbindung erfasst wird.

Bevorzugt weist hierbei der erste Steckverbinder ein Gehäuse auf mit einem dornartigen Fortsatz, welcher als Einführhilfe zur teilweisen Einführung des Indikatorelements in ein Gehäuse des zweiten Steckverbinders bei erstmaliger Ausbildung der Steckverbindung dient.

Weiter ist das Indikatorelement ausgebildet für eine zuvor beschriebene Vorrichtung und/oder ein zuvor beschriebenes Steckverbinder-Set. Das Indikatorelement weist dabei bevorzugt zumindest eines oder mehrere der folgenden Merkmale auf: den ersten Rastsitz, den zweiten Rastsitz, die Solltrennstelle, die erste elektrische Brücke, die zweite elektrische Brücke, eine Anzahl Kontaktfedern, ein Widerstandselement, eine elektronische Schaltung, einen integrierten Schaltkreis und/oder einen Hilfswiderstand.

Von Vorteil ist weiter eine Ausgestaltung des Indikatorelements, bei der dieses mit einer kennzeichnenden Markierung, beispielsweise einem Strichcode oder einer Seriennummer, zur Identifikation versehen ist. Ergänzend sind dann typischerweise auch der erste Steckverbinder und/oder der zweite Steckverbinder mit einer entsprechenden Markierung versehen. In bevorzugter Weiterbildung weist das Indikatorelement zwei insbesondere identische kennzeichnende Markierungen auf, die beidseitig der Solltrennstelle angeordnet sind.

Schließlich wird das eingangs genannte Problem gelöst durch ein Verfahren zur Erkennung einer erstmaligen Trennung einer Steckverbindung mittels der zuvor beschriebenen Vorrichtung, mittels des zuvor beschriebenen Steckverbinder-Sets und/oder mittels des zuvor beschriebenen Indikatorelements.

Ausführungsbeispiele der Erfindung werden nachfolgend anhand einer schematischen Zeichnung näher erläutert. Darin zeigen:
- Fig. 1: in einer teilweise transparenten Draufsicht eine erste Ausführung einer Vorrichtung mit einer ersten Ausführung eines Indikatorelements,
- Fig. 2: in einer teilweise transparenten Seitenansicht die erste Ausführung der Vorrichtung mit der ersten Ausführung des Indikatorelements,
- Fig. 3: in einer teilweise transparenten Draufsicht eine zweite Ausführung der Vorrichtung mit einer zweiten Ausführung des Indikatorelements,
- Fig. 4: in einer teilweise transparenten Seitenansicht die zweite Ausführung der Vorrichtung mit der zweiten Ausführung des Indikatorelements,
- Fig. 5: in einer teilweise transparenten Draufsicht eine dritte Ausführung der Vorrichtung mit der zweiten Ausführung des Indikatorelements,
- Fig. 6: in einer teilweise transparenten Seitenansicht die dritte Ausführung der Vorrichtung mit der zweiten Ausführung des Indikatorelements,
- Fig. 7: in einer Draufsicht eine dritte Ausführung des Indikatorelements,
- Fig. 8: in einer teilweise transparenten Schnittdarstellung eine vierte Ausführung der Vorrichtung mit einer vierten Ausführung des Indikatorelements,
- Fig. 9: in einer Draufsicht die vierte Ausführung des Indikatorelements,
- Fig. 10: in einer Schnittdarstellung die vierte Ausführung des Indikatorelements sowie
- Fig. 11: in einer Draufsicht eine fünfte Ausführung des Indikatorelements.

Einander entsprechende Teile sind in allen Figuren jeweils mit den gleichen Bezugszeichen versehen.

Eine nachfolgend exemplarisch beschriebene Vorrichtung 2 ist ausgebildet zur Erkennung einer erstmaligen Trennung einer Steckverbindung, wobei die Steckverbindung bei der erstmaligen Trennung von einem verbundenen Zustand in einen getrennten Zustand überführt wird. Die Vorrichtung ist hierbei bevorzugt für die Verwendung in einem Bordnetz eines Kraftfahrzeuges ausgebildet und wird dementsprechend bevorzugt in ein Kraftfahrzeug eingebaut.

Die Vorrichtung weist dabei zwei zueinander kompatible Steckverbinder 4,6 auf, nämlich einen ersten Steckverbinder 4 und einen zweiten Steckverbinder 6, sowie ein Indikatorelement 8. Dabei bilden der erste Steckverbinder 4, der zweite Steckverbinder 6 und das Indikatorelement 8 ein Steckverbinder-Set aus und zumindest ein solches Steckverbinder-Set ist Teil der Vorrichtung 2. In den meisten Anwendungsfällen weist die Vorrichtung 2 jedoch mehrere solcher Steckverbinder-Sets auf. Der Einfachheit halber werden nachfolgend dennoch lediglich Ausführungsvarianten der Vorrichtung 2 näher beschrieben, bei denen nur ein Steckverbinder-Set gegeben ist, da die Erweiterung auf mehrere Steckverbinder-Sets für den Fachmann keine Hürde darstellt.

Bei allen nachfolgend beschriebenen Ausführungsvarianten weist das Indikatorelement 8 einen folienartigen Träger 10 aus einem Isoliermaterial auf, wobei der folienartige Träger 10 beispielsweise durch eine Polyimid-Folie ausgebildet ist. Weiter ist das Indikatorelement 8 im verbundenen Zustand im ersten Steckverbinder 4 sowie im zweiten Steckverbinder 6 fixiert und die Vorrichtung 2 ist weiter derart ausgestaltet, dass im Zuge der erstmaligen Trennung der Steckverbindung zumindest ein Teilstück A des Indikatorelements 8 und/oder des folienartigen Trägers 10 versetzt wird, zumindest relativ zum ersten Steckverbinder 4, und das Indikatorelement 8 und/oder der folienartige Träger 10 mechanisch beschädigt wird.

Ebenfalls allen Ausführungsvarianten gemein sind zumindest zwei Kontaktelemente 12, die typischerweise beide Teil des ersten Steckverbinders 4 sind und die über eine erste elektrische Brücke 14, welche beispielsweise eine elektrisch leitfähige Struktur 16 aufweist, miteinander verbunden sind oder miteinander verbindbar sind, wobei die Vorrichtung 2 zudem derart ausgestaltet ist, dass im Zuge der erstmaligen Trennung der Steckverbindung die Verbindung zwischen den zwei Kontaktelementen 12 über die erste elektrische Brücke 14 verändert wird, wobei diese Veränderung als ein Indiz für die erstmalige Trennung der Steckverbindung erfasst wird.

Hierbei verändert sich im Falle der meisten Ausführungsvarianten eine Leitfähigkeit zwischen den zumindest zwei Kontaktelementen 12, wenn es zu einer erstmaligen Trennung kommt, wobei die Änderung des Widerstandes als Indiz für die erstmalige Trennung der Steckverbindung erfasst wird.

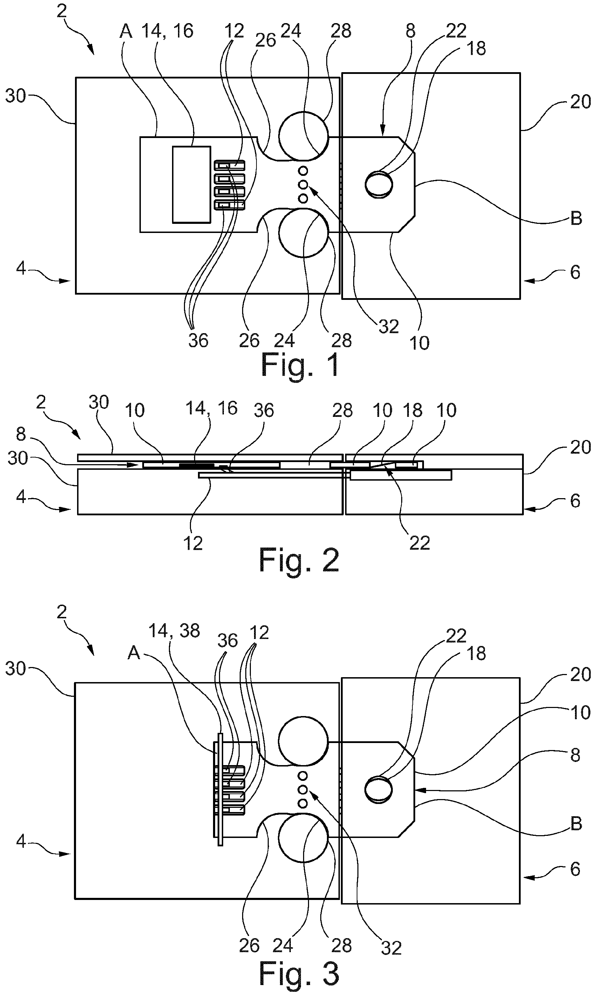

Eine erste Ausführungsvariante der Vorrichtung 2 mit einer ersten Ausführung des Indikatorelements 8 ist in Fig. 1 und Fig. 2 wiedergegeben. Gezeigt ist dabei der verbundene Zustand der Steckverbindung, also der Zustand nach der erstmaligen Ausbildung der Steckverbindung und vor der erstmaligen Trennung der Steckverbindung.

Wie bereits zuvor erwähnt, ist in diesem Zustand das Indikatorelement 8 sowohl im ersten Steckverbinder 4 als auch im zweiten Steckverbinder 6 fixiert. Hierzu weist der zweite Steckverbinder 6 ein als Nase 18 oder Vorsprung ausgebildetes Rastelement auf, welches Teil eines Gehäuses 20 des zweiten Steckverbinders 6 ist und in eine Aussparung 22 im folienartigen Träger 10 eingreift. Die Aussparung 22 ist dabei beispielsweise als ein insbesondere ausgestanztes Loch im folienartigen Träger 10 ausgebildet. Für eine einfache Montage und somit eine vereinfachte erstmalige Ausbildung der Steckverbindung weist die Nase 18 hierbei bevorzugt eine uneinheitliche Höhe oder Ausdehnung quer zur Verbindungsrichtung der beiden Steckverbinder 4,6 auf. D. h., dass die Nase 18 beispielsweise im Querschnitt gesehen eine Rampenform aufweist, so wie dies aus Fig. 2 hervorgeht.

Die Fixierung des Indikatorelements 8 im ersten Steckverbinder 4 erfolgt im ersten Ausführungsbeispiel mithilfe zweier Rastsitze 24,26, nämlich einem ersten Rastsitz 24 und einem zweiten Rastsitz 26, wobei jeder Rastsitz 24,26 bevorzugt durch zwei Aussparungen oder Einkerbungen am folienartigen Träger 10 ausgebildet ist. Dabei sind beispielsweise für jeden Rastsitz 24,26 an zwei gegenüberliegenden Seiten des folienartigen Trägers 10 zwei einander ergänzende insbesondere bogenförmige Aussparungen oder Einkerbungen ausgebildet. Die Rastsitze 24,26 werden ergänzt durch zwei Haltestege 28, welche Teil eines Gehäuses 30 des ersten Steckverbinders 4 sind und die je nach Position des Indikatorelements 8 oder des folienartigen Trägers 10 relativ zum ersten Steckverbinder 4 in den ersten Rastsitz 24 oder den zweiten Rastsitz 26 eingreifen und somit das Indikatorelement bzw. den folienartigen Träger im ersten Rastsitz 24 oder im zweiten Rastsitz 26 halten. Im ersten Ausführungsbeispiel gehen die Aussparungen der beiden Rastsitze 24,26 im folienartigen Träger 10 zudem quasi ineinander über.

Beim erstmaligen Trennen der Steckverbindung wird nun das Indikatorelement 8 und insbesondere der folienartige Träger 10 zunächst relativ zum ersten Steckverbinder 4 ein Stück weit versetzt oder verschoben, wobei das Indikatorelements 8 bzw. der folienartige Träger 10 aus dem ersten Rastsitz 24 in den zweiten Rastsitz 26 verschoben wird. Werden nachfolgend die beiden Steckverbinder 4,6 noch weiter auseinandergezogen und schließlich vollständig getrennt, so wird das Indikatorelement 8 bzw. der folienartige Träger 10 mechanisch beschädigt und an einer Solltrennstelle 32 durchtrennt, wobei das Indikatorelements 8 bzw. der folienartige Träger 10 an der Solltrennstelle 32 bevorzugt eine Perforation aufweist.

Nach der Durchtrennung verbleibt das erste Teilstück A des Indikatorelements 8 bzw. des folienartigen Trägers 10 im ersten Steckverbinder 4, wobei dieses Teilstück A im zweiten Rastsitz 26 gehalten wird und somit versetzt bleibt im Vergleich zum verbundenen Zustand der Steckverbindung. Ein zweites Teilstück B des Indikatorelements 8 oder des folienartigen Trägers 10 verbleibt im zweiten Steckverbinder 6 und durch die Zerteilung des Indikatorelements 8 bzw. des folienartigen Trägers 10 wird die erstmalige Trennung der Steckverbindung quasi optisch angezeigt, d. h. dass die Zertrennung oder Zerteilung ein optisches Indiz für die erstmalige Trennung der Steckverbindung darstellt.

Ein weiteres Indiz für die erstmalige Trennung der Steckverbindung stellt bei dieser Ausführungsvariante die zuvor beschriebene Änderung der Leitfähigkeit zwischen den zumindest zwei Kontaktelementen 12 dar, wobei diese Änderung erfasst wird und wobei insbesondere der Zeitpunkt oder ein Zeitrahmen erfasst und bevorzugt abgespeichert wird, in dem die Änderung der Leitfähigkeit erfolgt oder erfolgt ist.

Hierzu weist die Vorrichtung 2 im ersten Ausführungsbeispiel gemäß Fig. 1 und Fig. 2 die zuvor genannte elektrisch leitfähige Struktur 16 auf, die Teil des Indikatorelements 8 ist und die erste elektrische Brücke 14 ausbildet. Die elektrisch leitfähige Struktur 16 ist dabei zum Beispiel als metallische Beschichtung auf dem folienartigen Träger 10 ausgebildet.

Die Kontaktelemente 12 weisen zudem in diesem Ausführungsbeispiel Kontaktfedern 36 auf, die als einfache Federbalken von den Kontaktelementen 12 abstehen und das Indikatorelement 8 berühren. Im verbundenen Zustand drücken die Kontaktfedern 36 dabei zunächst gegen den folienartigen Träger 10 aus Isoliermaterial, sodass zwischen den Kontaktelementen 12 quasi ein unendlich hoher Widerstand gegeben ist. Durch das Verschieben des ersten Teilstücks A des folienartigen Trägers 10 im Zuge der erstmaligen Trennung der Steckverbindung wird auch die die erste elektrische Brücke 14 ausbildende elektrisch leitfähige Struktur 16 verschoben und bei Erreichen des zweiten Rastsitzes 26 liegt die elektrisch leitfähige Struktur 16, welche im Ausführungsbeispiel eine Streifenform aufweist, auf der Höhe der Kontaktfedern 36, sodass die elektrisch leitfähige Struktur 16 die Kontaktfedern 36 und somit die Kontaktelemente 12 kurzschließt. Der Widerstand zwischen den Kontaktelementen ändert sich somit quasi von unendlich auf null und die Leitfähigkeit steigt quasi von null auf unendlich

Im Ausführungsbeispiel wird nun diese Änderung der Leitfähigkeit messtechnisch erfasst beispielsweise mittels einer nicht näher dargestellten Messvorrichtung oder Steuer- und Auswerteeinheit, also zum Beispiel einem Steuergerät. In einem solchen Fall wird dann bevorzugt zudem ein Zeitpunkt oder ein Zeitrahmen ermittelt und in einem Speicher abgespeichert, zu dem die erstmalige Trennung erfolgt oder erfolgt ist.

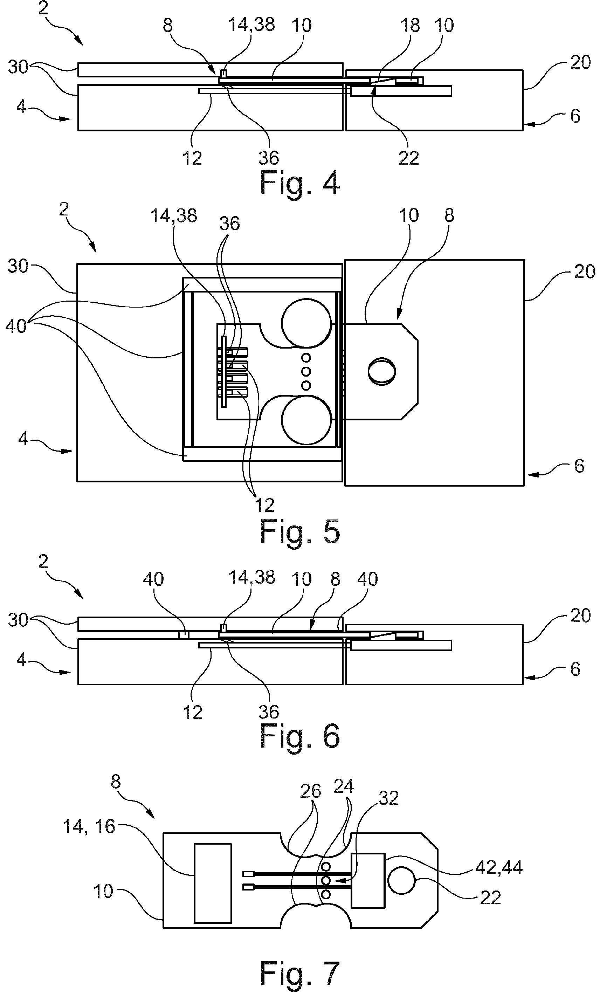

Eine zweite Ausführungsvariante der Vorrichtung 2 ist in Fig. 3 und Fig. 4 dargestellt. Diese zweite Ausgestaltungsvariante unterscheidet sich von der ersten lediglich hinsichtlich der Ausgestaltung der ersten elektrischen Brücke 14, wobei die erste elektrische Brücke 14 nicht durch eine elektrisch leitfähige Struktur 16 auf dem folienartigen Träger 10 ausgebildet ist, sondern durch einen Querleiter 38.

Bei dem Querleiter 38 handelt es sich im Ausführungsbeispiel um einen einfachen Draht oder einen metallischen Stift, dessen Enden in das Gehäuse 30 des ersten Steckverbinders 4 eingebettet sind. Der Querleiter 38 ist dabei im verbundenen Zustand der Steckverbindung durch den folienartigen Träger 10 von den Kontaktfedern 36 der Kontaktelemente 12 getrennt und somit durch das Isoliermaterial des folienartigen Trägers 10 von den Kontaktfedern 36 isoliert. Im getrennten Zustand der Steckverbindung dagegen ist das erste Teilstück A aus dem Zwischenraum zwischen dem Querleiter 38 und den Kontaktfedern 36 herausgezogen, sodass die Kontaktfedern 36 am Querleiter 38 anliegen und eine elektrisch leitfähige Verbindung hergestellt ist, durch die die Kontaktelemente 12 kurzgeschlossen sind.

Auch hier erfolgt dann bevorzugt wieder eine messtechnische Erfassung der Änderung der Leitfähigkeit infolge des Kurzschließens der Kontaktelemente 12. Alternativ sind die Kontaktelemente 12 Teil eines nicht vollständig abgebildeten Versorgungs-Stromkreises, der von einer nicht dargestellten Steuer- und Auswerteeinheit gespeist wird. Liegen die Kontaktelemente 12 dann vor dem Kurzschließen auf unterschiedlichen Potentialen, führt der gegenüber dem normalen Stromverbrauch der Steuer- und Auswerteeinheit deutlich erhöhte Kurzschluss-Strom zum Auslösen eines nicht näher dargestellten Sicherungselements, welches elektrisch leitfähig mit einem der zwei Kontaktelemente 12 verbunden ist und beispielsweise durch eine Schmelzsicherung ausgebildet ist. Die Änderung der Leitfähigkeit wird in diesem Fall also durch Auslösen des Sicherungselements ermittelt oder erfasst und infolgedessen wird dann typischerweise ein mithilfe der Vorrichtung 2 kurzgeschlossener Stromkreis dauerhaft unterbrochen, auch wenn beispielsweise die beiden Steckverbinder 4,6 nach erstmaliger Trennung der Steckverbindung wieder miteinander verbunden werden.

Eine leichte Abwandlung dieser Ausführungsvariante ist in Fig. 5 und Fig. 6 dargestellt. Jene Abwandlung unterscheidet sich von der zweiten Ausführungsvariante der Vorrichtung 2 lediglich dadurch, dass zumindest der erste Steckverbinder 4 zumindest ein Dichtelement 40 aufweist, durch welches der Innenraum im Gehäuse 30 des ersten Steckverbinders 4 nach außen hin abgedichtet ist, sodass weder Schmutz noch Flüssigkeiten eindringen können, insbesondere kein Spritzwasser.

Weiter ist in Fig. 7 eine dritte Ausgestaltungsvariante des Indikatorelements 8 dargestellt, die anstelle der ersten Ausführungsvariante des Indikatorelements 8 in der Vorrichtung 2 gemäß Fig. 1 und Fig. 2 genutzt werden kann und je nach Anwendungszweck auch genutzt wird. Bei dieser Ausführung des Indikatorelements 8 sind auf dem folienartigen Träger 10 aus Isolatormaterial zwei voneinander getrennte elektrische Brücken 14,42 realisiert, nämlich die erste elektrische Brücke 14 und eine zweite elektrische Brücke 42.

Die zweite elektrische Brücke 42 weist dabei ein Widerstandselement 44 auf, beispielsweise eine Kohlestruktur, und ist im verbundenen Zustand der Steckverbindung elektrisch leitfähig mit den Kontaktelementen 12 verbunden. D. h., dass bei der erstmaligen Trennung der Steckverbindung ein Wechsel von der zweiten elektrischen Brücke 42 hin zur ersten elektrischen Brücke 14 erfolgt. Zudem wird die zweite elektrische Brücke 42, die sich über die Solltrennstelle 32 hinweg erstreckt, im Zuge der erstmaligen Trennung der Steckverbindung zerstört oder beschädigt. Dadurch lässt sich die Änderung der Leitfähigkeit oder die Widerstandsänderung auch dann nicht mehr rückgängig machen, wenn das Teilstück A des Indikatorelements 8 durch Manipulationen aus dem zweiten Rastsitz 26 zurück in den ersten Rastsitz 24 verbracht wird.

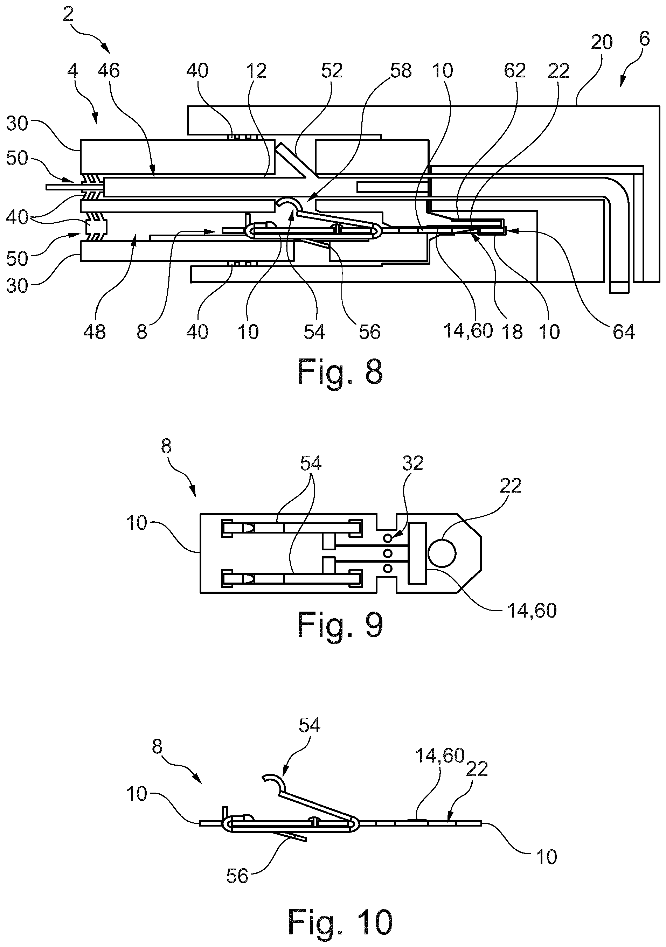

Eine weitere Ausführungsvariante der Vorrichtung 2 ist in Fig. 8 bis Fig. 10 wiedergegeben. Hier ist das Gehäuse 30 des ersten Steckverbinders 4 als sogenanntes MQS-Gehäuse (MQS: Micro Quadlock System) ausgestaltet und weist zwei Ebenen 46,48 auf, nämlich eine erste Ebene 46 und eine zweite Ebene 48, mit Öffnungen 50 für Kontaktelemente 12. Die Anzahl der Öffnungen 50 in der ersten Ebene 46 entspricht dabei der Anzahl der Öffnungen 50 in der zweiten Ebene 48.

Die Öffnungen 50 in der ersten Ebene 46 sind dabei tatsächlich mit Kontaktelementen 12 belegt, wobei jedes Kontaktelement 12 mit einer Art Widerhaken 52 in einer der Öffnungen 50 verrastet ist. Die zweite Ebene 48 ist dagegen quasi zweckentfremdet und weist keine Kontaktelemente 12 auf. Stattdessen ist in der zweiten Ebene 48 das Indikatorelement 8 angeordnet. Das Indikatorelement 8 dieser Ausführungsvariante ist in Fig. 9 und Fig. 10 separat dargestellt.

Bei dieser Ausführungsvariante des Indikatorelements 8 weist dieses einen folienartigen Träger 10 aus Isoliermaterial auf und das Indikatorelement 8 ist, analog zur Ausführungsvariante gemäß Fig. 1 und Fig. 2, mittels Nase 16 und Aussparung 22 im Gehäuse 20 des zweiten Steckverbinders 6 fixiert. An dem folienartigen Träger 10 ist weiter für jedes Kontaktelement 12 eine Kontaktfeder 54 fixiert, die im Ausführungsbeispiel als Stanz-Biege-Teil ausgebildet ist.

Dabei weist jede Kontaktfeder 54 ein Rastelement 56 auf, mit dem das Indikatorelement 8 im Gehäuse 30 des ersten Steckverbinders 4 verrastet ist. Weiter durchgreifen die Kontaktfedern 54 Durchtritte 58 im Gehäuse 30 des ersten Steckverbinders 4, durch welche die zwei Ebenen 46,48 miteinander verbunden sind und jede Kontaktfeder 54 liegt an einem Kontaktelement 12 an.

Die erste elektrische Brücke 14 ist bei dieser Ausführungsvariante der Vorrichtung 2 durch ein Widerstandselement 60 und eine Leiterstruktur auf dem folienartigen Träger 10 realisiert, wobei die Kontaktfedern 54 mit der Leiterstruktur elektrisch leitfähig verbunden sind, beispielsweise durch Verlöten, sodass das Widerstandselement 60 im verbundenen Zustand den Widerstand zwischen den Kontaktelementen 12 vorgibt. Da sich die erste elektrische Brücke 14 über die Solltrennstelle 32 hinweg erstreckt, wird die erste elektrische Brücke 14 bei der erstmaligen Trennung der Steckverbindung zerstört, sodass nachfolgend im Prinzip keine Verbindung mehr zwischen den Kontaktelementen 12 gegeben ist und der Widerstand zwischen den Kontaktelementen 12 quasi unendlich hoch ist oder die Leitfähigkeit quasi null ist. Auf diese Weise ist dann wiederum eine Widerstandsänderung oder Änderung der Leitfähigkeit vorgegeben, die bevorzugt messtechnisch erfasst wird, zum Beispiel durch eine zuvor genannte Messvorrichtung oder Steuer- und Auswerteeinheit, also zum Beispiel durch ein Steuergerät.

Auch bei dieser Ausführungsvariante der Vorrichtung 2 weist das Gehäuse 30 des ersten Steckverbinders 4 zudem Dichtelemente 40 auf und zwar derart, dass der Innenraum des Gehäuses 30 bei ausgebildeter Steckverbindung abgedichtet ist.

Außerdem weist das Gehäuse 30 des ersten Steckverbinders 4 einen dornartigen Fortsatz 62 auf. Dieser dient als Einführhilfe für das Indikatorelement 8 in das Gehäuse 20 des zweiten Steckverbinders 6 bei der erstmaligen Ausbildung der Steckverbindung, wobei hierfür der dornartigen Fortsatz 62 und ein Abschnitt des Indikatorelements 8 in eine Aufnahme 64 am Gehäuse 20 des zweiten Steckverbinders 6 eingeführt wird. Der entsprechende Abschnitt des Indikatorelements 8 liegt dabei am dornartigen Fortsatz 62 an und wird in die Aufnahme 64 soweit eingeführt, dass die Nase 18 des Gehäuses 20 des zweiten Steckverbinders 6 in die Aussparung 22 des Indikatorelements 8 eingreift.

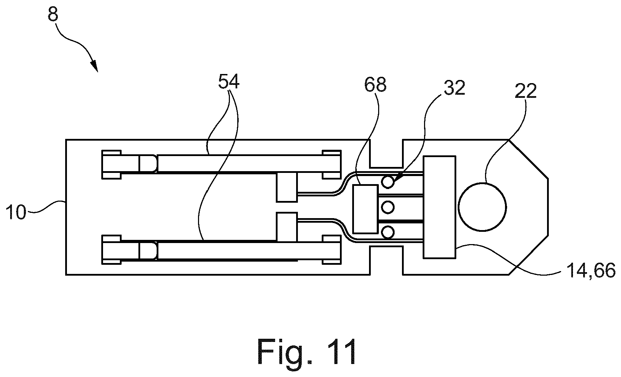

In Fig. 11 ist schließlich noch eine weitere Ausgestaltungsvariante des Indikatorelements 8 dargestellt. Sie unterscheidet sich von der Ausgestaltungsvariante des Indikatorelements 8 gemäß Fig. 9 und Fig. 10 durch die Ausgestaltung der ersten elektrischen Brücke 14. Die erste elektrische Brücke 14 weist im Falle der Ausführung gemäß Fig. 11 anstelle des Widerstandselements 60 einen integrierten Schaltkreis 66 auf. Dieser ist über zwei Leiterbahnen mit den Kontaktfedern 54 elektrisch leitfähig verbunden und somit auch mit den zwei Kontaktelementen 12 des ersten Steckverbinders 4, wenn das Indikatorelements 8 in der Vorrichtung 2 eingesetzt ist und sich die Vorrichtung 2 im verbundenen Zustand befindet. Die zwei Leiterbahnen sind hierbei im Ausführungsbeispiel auf den folienartigen Träger 10 aus Polyimid aufgedruckt und verlaufen über die Solltrennstelle 32 hinweg. Infolgedessen werden die zwei Leiterbahnen im Zuge der erstmaligen Trennung der Steckverbindung im Bereich der Solltrennstelle 32 durchtrennt und die elektrisch leitfähige Verbindung zwischen den zwei Kontaktelementen 12 und dem integrierten Schaltkreis 66 wird unterbrochen.

Der integrierte Schaltkreis 66 fungiert im Ausführungsbeispiel als eine Art Identifikationschip oder Erkennungschip, der das Indikatorelement 8 eindeutig identifiziert. Ergänzend ist dann eine zuvor genannte Messvorrichtung oder Steuer- und Auswerteeinheit, also zum Beispiel ein Steuergerät, dazu eingerichtet, in zumindest einem Betriebsmodus mit dem integrierten Schaltkreis 66 zu interagieren, insbesondere um die Identifikation auszulesen. Dazu werden zum Beispiel in gewissen zeitlichen Abständen und insbesondere periodisch Signale oder Signalpulse von der Messvorrichtung bzw. von der Steuer- und Auswerteeinheit über die elektrisch leitfähige Verbindung zwischen den Kontaktfedern 54 und dem integrierten Schaltkreis 66 an den integrierten Schaltkreis 66 übermittelt. Daraufhin erhält die Messvorrichtung bzw. die Steuer- und Auswerteeinheit ein Antwortsignal, welches für das Indikatorelement 8 charakteristisch ist und dieses somit identifiziert. Nach der erstmaligen Trennung der Steckverbindung ist diese Interaktion nicht mehr möglich. D. h. dass die Messvorrichtung bzw. die Steuer- und Auswerteeinheit kein Antwortsignal mehr erhält und in diesem Fall wird das Ausbleiben eines Antwortsignals von der Messvorrichtung bzw. der Steuer- und Auswerteeinheit als Indiz für die erstmalige Trennung der Steckverbindung erfasst.

Im Ausführungsbeispiel gemäß Fig. 11 ist der integrierte Schaltkreis 66 zudem ergänzt durch einen Hilfswiderstand 68. Der Hilfswiderstand 68 ist dabei durch zwei weitere Leiterbahnen mit dem integrierten Schaltkreis 66 elektrisch leitfähig verbunden, wobei diese zwei weitere Leiterbahnen wiederum über die Solltrennstelle 32 hinweg verlaufen. D. h., dass zum einen die Kontaktfedern 36 und der integrierte Schaltkreis 66 auf unterschiedlichen Seiten der Solltrennstelle 32 angeordnet sind und dass zum anderen der Hilfswiderstand 68 und der integrierte Schaltkreis 66 auf unterschiedlichen Seiten der Solltrennstelle 32 angeordnet sind. Auch die zwei weiteren Leiterbahnen werden daher im Zuge der erstmaligen Trennung der Steckverbindung durchtrennt.

Einer alternativen Ausgestaltungsvariante des Indikatorelements 8 gemäß Fig. 11 entsprechend ist der integrierte Schaltkreis 66 nicht durch einen solchen Hilfswiderstand 68 ergänzt und dementsprechend weist dann das Indikatorelement 8 keinen solchen Hilfswiderstand 68 auf.

### Bezugszeichenliste

- 2: Vorrichtung
- 4: erster Steckverbinder
- 6: zweiter Steckverbinder
- 8: Indikatorelement
- 10: folienartiger Träger
- 12: Kontaktelement
- 14: erste elektrische Brücke
- 16: elektrisch leitfähige Struktur
- 18: Nase/Rastelement
- 20: Gehäuse des zweiten Steckverbinders
- 22: Aussparung
- 24: erster Rastsitz
- 26: zweiter Rastsitz
- 28: Haltesteg
- 30: Gehäuse des ersten Steckverbinders
- 32: Solltrennstelle
- 36: Kontaktfeder eines Kontaktelements
- 38: Querleiter
- 40: Dichtelement
- 42: zweite elektrische Brücke
- 44: Widerstandselement der zweiten elektrischen Brücke
- 46: erste Ebene
- 48: zweite Ebene
- 50: Öffnung
- 52: Widerhaken
- 54: Kontaktfeder des Indikatorelements
- 56: Rastelement
- 58: Durchtritt
- 60: Widerstandselement der ersten elektrischen Brücke
- 62: dornartiger Fortsatz
- 64: Aufnahme
- 66: integrierter Schaltkreis
- 68: Hilfswiderstand

- A: erstes Teilstück
- B: zweites Teilstück

## Patentansprüche

1. Steckverbinder-Set (4,6,8) zur Ausbildung einer Steckverbindung sowie zur Erkennung einer erstmaligen Trennung der Steckverbindung, wobei die Steckverbindung bei der erstmaligen Trennung von einem verbundenen Zustand in einen getrennten Zustand überführt wird, aufweisend
- zwei zueinander kompatible Steckverbinder (4,6), nämlich einen ersten Steckverbinder (4) und einen zweiten Steckverbinder (6),
**dadurch gekennzeichnet, dass** dieses aufweist
- ein Indikatorelement (8) mit einem folienartigen Träger (10) aus einem Isoliermaterial, welches im verbundenen Zustand im ersten Steckverbinder (4) sowie im zweiten Steckverbinder (6) fixiert ist, sowie
- zwei Kontaktelemente (12), die über eine erste elektrische Brücke (14) miteinander verbunden sind oder verbindbar sind,
und dass dieses ausgestaltet ist derart, dass im Zuge der erstmaligen Trennung
- zumindest ein Teilstück (A) des folienartigen Trägers (10) versetzt wird,
- der folienartige Träger (10) mechanisch beschädigt wird und
- die Verbindung zwischen den zwei Kontaktelementen (12) über die erste elektrische Brücke (14) verändert wird, wobei diese Veränderung als Indiz für die erstmalige Trennung der Steckverbindung erfassbar ist.

2. Steckverbinder-Set (4,6,8) nach Anspruch 1,
wobei jedes der zwei Kontaktelemente (12) eine Kontaktfeder (36) aufweist, die im verbundenen Zustand gegen das Indikatorelement (8) und insbesondere den folienartigen Träger (10) drückt.

3. Steckverbinder-Set (4,6,8) nach Anspruch 1 oder 2,
wobei die erste elektrische Brücke (14) entweder lediglich im verbundenen Zustand elektrisch leitfähig mit den zwei Kontaktelementen (12) verbunden ist oder lediglich im getrennten Zustand.

4. Steckverbinder-Set (4,6,8) nach einem der Ansprüche 1 bis 3,
wobei das Indikatorelement (8) eine elektrisch leitfähige Struktur (16) aufweist, die mit dem folienartigen Träger (10) verbunden ist und die die erste elektrische Brücke (14) zumindest teilweise ausbildet.

5. Steckverbinder-Set (4,6,8) nach einem der Ansprüche 1 bis 3,
wobei ein im ersten Steckverbinder (4) integrierter Querleiter (38) die erste elektrische Brücke (14) ausbildet und wobei insbesondere der folienartige Träger (10) aus dem Isoliermaterial im verbundenen Zustand zwischen dem Querleiter (38) und den zwei Kontaktelementen (12) positioniert ist und hierdurch den Querleiter (38) von den zwei Kontaktelementen (12) elektrisch isoliert.

6. Steckverbinder-Set (4,6,8) nach einem der Ansprüche 1 bis 5,
wobei die erste elektrische Brücke (14) oder eine zweite elektrische Brücke (42) ein Widerstandselement (60 bzw. 44) und/oder eine elektronische Schaltung (66) aufweist.

7. Steckverbinder-Set (4,6,8) nach einem der Ansprüche 1 bis 6,
wobei das Indikatorelement (8) die erste elektrische Brücke (14) aufweist, wobei die erste elektrische Brücke (14) einen integrierten Schaltkreis (66) aufweist und wobei das Indikatorelement (8) insbesondere derart ausgestaltet ist, dass der integrierte Schaltkreis (66) im verbundenen Zustand mit den zwei Kontaktelementen (12) elektrisch leitfähig verbunden ist und durch eine erstmalige Trennung der Steckverbindung von den zwei Kontaktelementen (12) getrennt wird.

8. Steckverbinder-Set (4,6,8) nach einem der Ansprüche 1 bis 7,
wobei das Indikatorelement (8) für jedes der zwei Kontaktelemente (12) eine elektrisch leitfähige Kontaktfeder (54) aufweist, die gegen das zugehörige Kontaktelement (12) drückt.

9. Steckverbinder-Set (4,6,8) nach Anspruch 8,
wobei jede Kontaktfeder (54) als Stanz-Biege-Teil ausgestaltet ist, am folienartigen Träger (10) befestigt, insbesondere verastet, ist und mit einer am folienartigen Träger (10) anhaftenden Leiterstruktur elektrisch kontaktiert ist.

10. Steckverbinder-Set (4,6,8) nach einem der Ansprüche 1 bis 9,
wobei der erste Steckverbinder (4) ein Gehäuse (30) aufweist mit Öffnungen (50) für Kontaktelemente (12) in zwei übereinanderliegenden Ebenen (46,48), wobei die zwei Kontaktelemente (12) in einer der zwei Ebenen (46) angeordnet sind und wobei das Indikatorelement (8) in der anderen Ebene (48) angeordnet ist.

11. Vorrichtung (2) aufweisend ein Steckverbinder-Set (4,6,8) nach einem der vorhergehenden Ansprüche sowie aufweisend eine Auswerteeinheit zur Erfassung einer Veränderung der Verbindung zwischen den zwei Kontaktelementen über die erste elektrische Brücke.

12. Vorrichtung (2) nach Anspruch 11,
wobei die Auswerteeinheit, welche insbesondere mit einem Permanentspeicher versehen ist, derart ausgebildet ist, dass im verbundenen Zustand in zumindest einem Betriebsmodus eine Interaktion zwischen dem integrierten Schaltkreis (66) und der Auswerteeinheit erfolgt, wobei sich diese Interaktion durch eine erstmalige Trennung der Steckverbindung verändert und wobei diese Veränderung von der Auswerteeinheit als Indiz für die erstmalige Trennung der Steckverbindung erfassbar ist.

13. Vorrichtung (2) nach Anspruch 12,
wobei diese derart ausgebildet ist, dass im Zuge der Interaktion der integrierte Schaltkreis (66) periodisch ein Signal, insbesondere ein das Indikatorelement (8) identifizierendes Signal, an die Auswerteeinheit übermittelt wird, wobei sich das Signal durch eine erstmalige Trennung der Steckverbindung verändert.

14. Verfahren zur Erkennung einer erstmaligen Trennung einer Steckverbindung, bei der die Steckverbindung von einem verbundenen Zustand in einen getrennten Zustand überführt wird, wobei
- die Steckverbindung ausgebildet wird zwischen zwei zueinander kompatiblen Steckverbindern (4,6), nämlich zwischen einem ersten Steckverbinder (4) und einem zweiten Steckverbinder (6),
- die Steckverbindung derart ausgebildet wird, dass ein Indikatorelement (8) mit einem folienartigen Träger (10) aus einem Isoliermaterial im verbundenen Zustand im ersten Steckverbinder (4) sowie im zweiten Steckverbinder (6) fixiert ist und dass zwei Kontaktelemente (12) über eine erste elektrische Brücke (14) miteinander verbunden sind oder verbindbar sind,
- im Zuge der erstmaligen Trennung zumindest ein Teilstück (A) des folienartigen Trägers (10) versetzt wird,
- im Zuge der erstmaligen Trennung der folienartige Träger (10) mechanisch beschädigt wird und
- im Zuge der erstmaligen Trennung die Verbindung zwischen den zwei Kontaktelementen (12) über die erste elektrische Brücke (14) verändert wird, wobei diese Veränderung als Indiz für die erstmalige Trennung der Steckverbindung erfasst wird.

## Claims

1. A set of plug-in connectors (4,6,8) for forming a plug-in connection as well as for detecting an initial disconnection of the plug-in connection, wherein the plug-in connection, upon initial disconnection, is transitioned from a connected state to a disconnected state, having
- two plug-in connectors (4, 6), compatible with each other, namely a first plug-in connector (4) and a second plug-in connector (6),
**characterized in that** this set has
- an indicator element (8) with a film-shaped support (10), made of an insulating material, which, in the connected state, is fixed in the first plug-in connector (4) as well as in the second plug-in connector (6), as well as
- two contact elements (12) which are connected or can be connected with each other by a first electrical bridge (14),
and **in that** this set is configured such that, during the initial disconnection,
- at least a part (A) of the film-shaped support (10) is moved,
- the film-shaped support (10) is mechanically damaged, and
- the connection between the two contact elements (12) is modified via the first electrical bridge (14), wherein this modification is able to be captured as an indication of the initial disconnection of the plug-in connection.

2. The set of plug-in connectors (4,6,8) according to claim 1,
wherein each of the two contact elements (12) has a contact spring (36) which, in the connected state, presses against the indicator element (8) and in particular against the film-shaped support (10).

3. The set of plug-in connectors (4,6,8) according to claim 1 or 2,
wherein the first electrical bridge (14) is electrically conductively connected to the two contact elements (12) either only in the connected state or only in the disconnected state.

4. The set of plug-in connectors (4,6,8) according to any one of claims 1 to 3,
wherein the indicator element (8) has an electrically conductive structure (16) which is connected to the film-shaped support (10) and which at least partly constitutes the first electrical bridge (14).

5. The set of plug-in connectors (4,6,8) according to any one of claims 1 to 3, wherein a transverse conductor (38), integrated in the first plug-in connector (4), constitutes the first electrical bridge (14) and in which in particular the film-shaped support (10), made of the insulating material, is in the connected state positioned between the transverse conductor (38) and the two contact elements (12) and thus electrically insulates the transverse conductor (38) from the two contact elements (12).

6. The set of plug-in connectors (4,6,8) according to any one of claims 1 to 5, wherein the first electrical bridge (14) or a second electrical bridge (42) has a resistance element (60 or 44 respectively) and/or an electronic switching circuit (66).

7. The set of plug-in connectors (4,6,8) according to any one of claims 1 to 6, wherein the indicator element (8) has the first electrical bridge (14), wherein the first electrical bridge (14) has an integrated switching circuit (66) and wherein the indicator element (8) is configured in particular in such a way that, in the connected state, the integrated switching circuit (66) is electrically conductively connected to the two contact elements (12) and is disconnected from the two contact elements (12) by an initial disconnection of the plug-in connection.

8. The set of plug-in connectors (4,6,8) according to any one of claims 1 to 7, wherein the indicator element (8) has, for each of the two contact elements (12), an electrically conductive contact spring (54) which presses against the corresponding contact element (12).

9. The set of plug-in connectors (4,6,8) according to claim 8,
wherein each contact spring (54) is configured as a punched-bent part, is fixed, in particular snapped, onto the film-shaped support (10) and is electrically in contact with a conductive structure, adhering to the film-shaped support (10).

10. The set of plug-in connectors (4,6,8) according to any one of claims 1 to 9,
wherein the first plug-in connector (4) has a housing (30), provided with openings (50) for contact elements (12) in two superimposed planes (46, 48), wherein the two contact elements (12) are arranged in one of the two planes (46) and wherein the indicator element (8) is arranged in the other plane (48).

11. A device (2) having a set of plug-in connectors (4, 6, 8) according to any one of the preceding claims, as well as also having an evaluation unit for detecting a change in the connection between the two contact elements via the first electrical bridge.

12. The device (2) according to claim 11,
wherein the evaluation unit, which is provided in particular with a permanent memory, is formed in such a way that, in the connected state, in at least one operating mode, an interaction takes place between the integrated switching circuit (66) and the evaluation unit, wherein this interaction is modified by an initial disconnection of the plug-in connection and wherein this modification can be captured by the evaluation unit as an indication of the initial disconnection of the plug-in connection.

13. The device (2) according to claim 12,
wherein the latter is formed in such a way that, during the interaction of the integrated switching circuit (66), a signal, in particular a signal identifying the indicator element (8), is periodically transmitted to the evaluation unit, wherein the signal is modified by an initial disconnection of the plug-in connection.

14. A method for detecting an initial disconnection of a plug-in connection,
wherein the plug-in connection is transitioned from a connected state to a disconnected state, wherein
- the plug-in connection is formed between two mutually compatible plug-in connectors (4, 6), namely between a first plug-in connector (4) and a second plug-in connector (6),
- the plug-in connection is formed in such a way that an indicator element (8) with a film-shaped support (10), made of an insulating material, is fixed in the connected state in the first plug-in connector (4) as well as in the second plug-in connector (6) and that two contact elements (12) are connected or can be connected with each other by a first electrical bridge (14),
- during the initial disconnection, at least a part (A) of the film-shaped support (10) is moved,
- during the initial disconnection, the film-shaped support (10) is mechanically damaged, and
- during the initial disconnection, the connection between the two contact elements (12) is modified via the first electrical bridge (14), wherein this modification is captured as an indication of the initial disconnection of the plug-in connection.

## Revendications

1. Ensemble de connecteurs enfichables (4,6,8) destiné à la réalisation d'une connexion par enfichage ainsi qu'à la détection d'une déconnexion initiale de la connexion par enfichage, lors de la déconnexion initiale la connexion par enfichage étant passée d'un état connecté à un état déconnecté, comportant
- deux connecteurs enfichables (4, 6) compatibles entre eux, à savoir un premier connecteur enfichable (4) et un deuxième connecteur enfichable (6),
**caractérisé en ce que** cet ensemble comporte
- un élément indicateur (8) comportant un support (10) en forme de film en un matériau isolant, qui à l'état connecté est fixé dans le premier connecteur enfichable (4) ainsi que dans le deuxième connecteur enfichable (6), ainsi que
- deux éléments de contact (12) qui sont reliés ou peuvent être reliés entre eux par un premier pont électrique (14),
et **en ce que** cet ensemble est configuré de façon telle qu'au cours de la déconnexion initiale
- au moins une partie (A) du support (10) en forme de film est déplacée,
- le support (10) en forme de film est endommagé mécaniquement, et
- la connexion entre les deux éléments de contact (12) est modifiée par l'intermédiaire du premier pont électrique (14), cette modification pouvant être détectée comme indice de la déconnexion initiale de la connexion par enfichage.

2. Ensemble de connecteurs enfichables (4,6,8) selon la revendication 1, dans lequel chacun des deux éléments de contact (12) comporte un ressort de contact (36) qui, à l'état connecté, exerce une pression contre l'élément indicateur (8) et en particulier contre le support (10) en forme de film.

3. Ensemble de connecteurs enfichables (4,6,8) selon la revendication 1 ou 2, dans lequel le premier pont électrique (14) est relié de manière électriquement conductrice aux deux éléments de contact (12) soit uniquement à l'état connecté, soit uniquement à l'état déconnecté.

4. Ensemble de connecteurs enfichables (4,6,8) selon l'une quelconque des revendications 1 à 3,
dans lequel l'élément indicateur (8) présente une structure électriquement conductrice (16) qui est reliée au support (10) en forme de film et qui au moins en partie constitue le premier pont électrique (14).

5. Ensemble de connecteurs enfichables (4,6,8) selon l'une quelconque des revendications 1 à 3,
dans lequel un conducteur transversal (38) intégré dans le premier connecteur enfichable (4) constitue le premier pont électrique (14) et dans lequel en particulier le support (10) en forme de film en le matériau isolant est à l'état connecté positionné entre le conducteur transversal (38) et les deux éléments de contact (12) et ainsi isole électriquement le conducteur transversal (38) des deux éléments de contact (12).

6. Ensemble de connecteurs enfichables (4,6,8) selon l'une quelconque des revendications 1 à 5,
dans lequel le premier pont électrique (14) ou un deuxième pont électrique (42) comprend un élément de résistance (60 ou 44 respectivement) et/ou un circuit de commutation électronique (66).

7. Ensemble de connecteurs enfichables (4,6,8) selon l'une quelconque des revendications 1 à 6,
dans lequel l'élément indicateur (8) comporte le premier pont électrique (14), dans lequel le premier pont électrique (14) comporte un circuit de commutation intégré (66) et dans lequel l'élément indicateur (8) est conçu en particulier de façon telle qu'à l'état connecté le circuit de commutation intégré (66) est relié de manière électriquement conductrice aux deux éléments de contact (12) et est déconnecté des deux éléments de contact (12) par une déconnexion initiale de la connexion par enfichage.

8. Ensemble de connecteurs enfichables (4,6,8) selon l'une quelconque des revendications 1 à 7,
dans lequel l'élément indicateur (8) comporte pour chacun des deux éléments de contact (12), un ressort de contact (54) électriquement conducteur qui exerce une pression contre l'élément de contact (12) correspondant.

9. Ensemble de connecteurs enfichables (4,6,8) selon la revendication 8,
dans lequel chaque ressort de contact (54) est configuré sous forme d'une pièce poinçonnée et pliée, est fixé, en particulier encliqueté, sur le support (10) en forme de film et est électriquement en contact avec une structure conductrice adhérant au support (10) en forme de film.

10. Ensemble de connecteurs enfichables (4,6,8) selon l'une quelconque des revendications 1 à 9,
dans lequel le premier connecteur enfichable (4) comporte un boîtier (30) doté d'ouvertures (50) pour des éléments de contact (12) dans deux plans (46, 48) superposés, les deux éléments de contact (12) étant disposés dans l'un des deux plans (46) et l'élément indicateur (8) étant disposé dans l'autre plan (48).

11. Dispositif (2) comportant un ensemble de connecteurs enfichables (4,6,8) selon l'une quelconque des revendications précédentes ainsi que comportant une unité d'évaluation destinée à la détection d'une modification de la connexion entre les deux éléments de contact par l'intermédiaire du premier pont électrique.

12. Dispositif (2) selon la revendication 11,
dans lequel l'unité d'évaluation, qui est munie en particulier d'une mémoire permanente, est configurée de façon telle qu'à l'état connecté, dans au moins un mode de fonctionnement, une interaction a lieu entre le circuit de commutation intégré (66) et l'unité d'évaluation, cette interaction étant modifiée par une déconnexion initiale de la connexion par enfichage et cette modification étant détectable par l'unité d'évaluation comme indice de la déconnexion initiale de la connexion par enfichage.

13. Dispositif (2) selon la revendication 12,
celui-ci étant configuré de façon telle qu'au cours de l'interaction du circuit de commutation intégré (66), un signal, en particulier un signal identifiant l'élément indicateur (8), est transmis périodiquement à l'unité d'évaluation, le signal étant modifié par une déconnexion initiale de la connexion par enfichage.

14. Procédé pour la détection d'une déconnexion initiale d'une connexion par enfichage, dans lequel la connexion par enfichage est passée d'un état connecté à un état déconnecté, dans lequel
- la connexion par enfichage est réalisée entre deux connecteurs enfichables (4,6) compatibles entre eux, à savoir entre un premier connecteur enfichable (4) et un deuxième connecteur enfichable (6),
- la connexion par enfichage est configurée de façon telle qu'un élément indicateur (8) comportant un support (10) en forme de film en un matériau isolant est à l'état connecté fixé dans le premier connecteur enfichable (4) ainsi que dans le deuxième connecteur enfichable (6) et que deux éléments de contact (12) sont reliés ou peuvent être reliés entre eux par un premier pont électrique (14),
- au cours de la déconnexion initiale au moins une partie (A) du support (10) en forme de film est déplacée,
- au cours de la déconnexion initiale le support (10) en forme de film est endommagé mécaniquement et
- au cours de la déconnexion initiale la connexion entre les deux éléments de contact (12) est modifiée par l'intermédiaire du premier pont électrique (14), cette modification étant enregistrée comme indice de la déconnexion initiale de la connexion par enfichage.
